# EUROPÄISCHE PATENTSCHRIFT

(11) **EP 0 710 760 B1**
(45) Veröffentlichungstag und Bekanntmachung des Hinweises auf die Patenterteilung: **29.05.1996**
(21) Anmeldenummer: 94116656.3
(22) Anmeldetag: 21.10.1994
(51) Int. Cl.: E05F 15/16, F16H 1/16, F16H 57/02

(54) **Verstellantrieb, insbesondere Kraftfahrzeug-Fensterheberantrieb**
Adjusting drive, in particular motor vehicle window raising drive
Commande de déplacement, en particulier commande de déplacement pour lève-glace de voiture

(43) Veröffentlichungstag der Anmeldung: 08.05.1996
(73) Patentinhaber: SIEMENS AKTIENGESELLSCHAFT, D-80333 München (DE)
(72) Erfinder: Adam, Peter, D-97204 Höchberg (DE); Fiedler, Rudolf, D-97980 Bad Mergentheim (DE)

(56) Entgegenhaltungen:
- DE-A- 4 323 008
- DE-U- 9 114 785
- DE-U- 9 311 529

## Beschreibung

Die Erfindung bezieht sich auf einen Verstellantrieb, insbesondere Kraftfahrzeug-Fensterheberantrieb, gemäß Anspruch 1.

Durch die DE-U-89 03 714 ist ein Kraftfahrzeug-Fensterheberantrieb bekannt, bei dem ein axialer Lagerbolzen mit seinem einen Ende einstückig in ein Kunststoffgetriebegehäuse übergeht und auf dessen abtriebsseitiges freies Ende ein Getrieberad und ein damit über eine Dämpfungszwischenlage in Mitnahmeverbindung stehende Mitnehmerscheibe aufsteckbar und drehbar gelagert sind. Zur Kopplung mit einem äußeren Antriebsmittel, insbesondere der Seilscheibe eines Kraftfahrzeug-Fensterheberantriebes, ragt die Mitnehmerscheibe mit einem hülsenförmigen, axial stirnseitig offenen Wellenbund durch eine Öffnung des Getriebegehäusedeckels nach außen und trägt auf ihrem Außenumfang ein Antriebsritzel, auf welches das äußere Antriebsmittel mit einem korrespondierenden Ritzel aufsteckbar ist. Zur axialen Fixierung des Getrieberades bzw. der gegen diese im Endmontagezustand mittelbar bzw. unmittelbar anliegenden Mitnehmerscheibe liegt einerseits das Getrieberad axial am Boden des Getriebegehäuses an und rasten andererseits hinter die Stirnseite des freien Endes des Wellenbundes elastisch federnde Zungen des Lagerbolzens ein.

Der Getriebegehäusedeckel ist an seinem Außenrand in einem axial übergreifenden Paßrand des Getriebegehäuses geführt gehalten und durch eine zwischenzulegende statische Dichtung abzudichten; dynamische Dichtungen in Form von sogenannten 0-Dichtringen sind in absatzförmigen Halterungen zwischen der Durchstecköffnung des Getriebegehäusedeckels für den Wellenbund der Mitnehmerscheibe einerseits und dem Wellenbund und zwischen dem Wellenbund und dem Lagerbolzen andererseits vorgesehen. Vorzugsweise sind das Getriebegehäuse, der Lagerbolzen, die Mitnehmerscheibe sowie das Getrieberad derart als Kunststofformteile ausgebildet, daß sämtliche Lagersitzaufnahmen ohne Nachbearbeitung die erforderliche drehbare bzw. schwenkbare Lagerung gewährleisten können.

Gemäß Aufgabe vorliegender Erfindung soll ein Verstellantrieb geschaffen werden, der sich einerseits durch einen geringen Bauteile-, Fertigungs- und Montageaufwand auszeichnet und andererseits bei kompaktem Aufbau eine hohe mechanische Festigkeit sowie sichere Abdichtung gegen das Eindringen von Feuchtigkeit gewährleistet. Die Lösung dieser Aufgabe gelingt durch die Lehre des Anspruchs 1; vorteilhafte Ausgestaltungen der Erfindung sind jeweils Gegenstand der Unteransprüche.

Durch die Ausbildung des Getriebegehäusedeckels als tragendes und für die drehbare bzw. verschwenkbare Lagerung von Getrieberad und Mitnehmerscheibe verantwortliches Bauteil kann einerseits das Getriebegehäuse in aufwandsarmer Kunststoff-Spritzgußtechnik mit für eine Lagerung ungeeigneter Glasfaser-Verstärkung bzw. als Aluminium-Spritzgußgehäuse ohne Notwendigkeit einer Lageraufnahmenachbereitung gefertigt und andererseits der im Vergleich zum Getriebegehäuse nur eine geringere mechanische Festigkeit erfordernde Getriebegehäusedeckel entweder als einfaches Stanzbiege- bzw. Stanztiefzieh-Blechteil mit gleichzeitig geformtem Lagersitz oder aus gleitmodifizierten Kunstoff ohne für einen Lagersitz ungeeignete festigkeitserhöhende Beimischung von Glasfaser oder ähnlichem gefertigt werden.

Der Lagervorsprung der Mitnehmerscheibe kann in vorteilhafter Weise an seinem freien Ende bei einfacher Entformbarkeit der vorzugsweise aus Kunststoff gespritzten Mitnehmerscheibe einstückig geschlossen ausgeführt werden, so daß zusammen mit der einzigen axialen bzw. radialen dynamischen Dichtung zwischen dem Außenumfang des Lagervorsprungs der Mitnehmerscheibe und dem Getriebegehäuse und mit nur einer einzigen statischen Dichtung zwischen dem Außenrand des Getriebegehäusedeckels und einer außenrandseitigen Dichtfläche des Getriebegehäuses das gesamte Getriebegehäuse gegen das Eindringen von äußerer Feuchtigkeit abdichtbar ist; dies ist möglich bei gleichzeitig kompakter Bauform und wenigen toleranzbehafteten Bauteilen.

Zur axial äußeren Fixierung der mittelbar bzw. unmittelbar im Endmontagezustand voreinander liegenden Bauteile des Getrieberades einerseits und der Mitnehmerscheibe andererseits ist eine Abstützung dieser Bauteile jeweils gegenüber dem benachbarten Teil des Getriebegehäuses bzw. des Getriebegehäusedeckels vorgesehen, wobei zweckmäßigerweise zur Reibminderung an die Mitnehmerscheibe bzw. an das Getrieberad bzw. an das Getriebegehäuse bzw. an den Getriebegehäusedeckel Anlaufrippen einstückig mitangeformt, insbesondere mitangespritzt, sind, die jeweils paarweise verlaufen und vorzugsweise zwischen sich Schmiermittel-Depoträume einschließen.

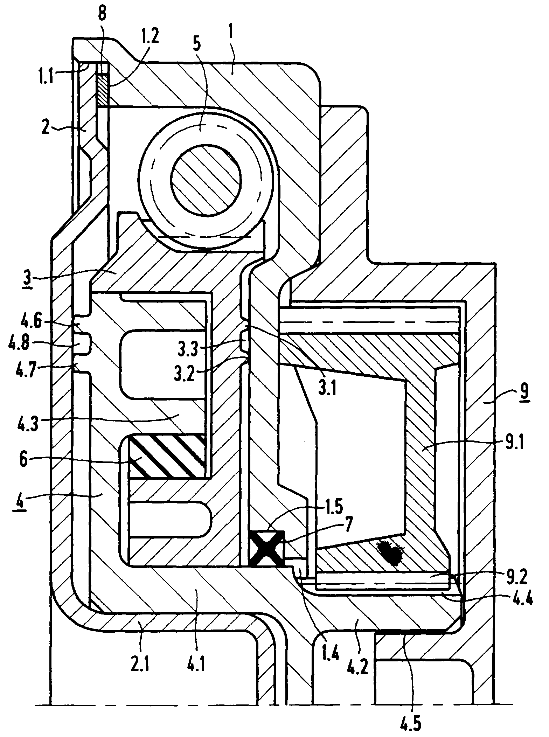

Die Erfindung sowie weitere vorteilhafte Ausgestaltungen der Erfindung gemäß Merkmalen der Unteransprüche werden im folgenden anhand eines schematisch dargestellten Ausführungsbeispiels in der Zeichnung näher erläutert; diese zeigt einen axialen Halbschnitt durch das Getriebegehäuse eines Kraftfahrzeug-Seilfensterheberantriebs.

Wie in einer z.B. durch die DE-U-89 03 714 bekannten Bauart eines Verstellantriebes ragt die als Schneckenwelle 5 verlängerte Rotorwelle eines Kommutatormotors in das an das Motorgehäuse des Kommutatormotors angeflanschte Getriebegehäuse 1, das durch einen Getriebegehäusedeckel 2 verschlossen ist. Die Schneckenwelle 5 kämmt mit einem Getrieberad 3, das dadurch mit einer Mitnehmerscheibe 4 in Mitnahmeverbindung steht, daß diese Mitnehmerscheibe 4 mit über ihren Umfang verteilten, axial vorstehenden Mitnahmezapfen 4.3 in korrespondierende Mitnahmeöffnungen des Getrieberades 3 über eine Dämpfungszwischenlage 6 eingreift.

Zur drehbaren bzw. verschwenkbaren Lagerung des Getrieberades 3 bzw. der Mitnehmerscheibe 4 ist in vorteilhafter Weise einstückig an den Getriebegehäusedeckel 2 ein in das Getriebegehäuse 1 axial ragender, vorzugsweise hülsenförmiger, Lagerhals 2.1 angeformt; der Getriebegehäusedeckel 2 und der einstückig angeformte Lagerhals 2.1 bestehen nach einer ersten Ausgestaltung der Erfindung aus einem metallenen Stanzbiege- bzw. Stanztiefzieh-Blechteil oder nach einer weiteren Ausgestaltung der Erfindung aus einem von einer festigkeitserhöhenden Beimischung freien, vorzugsweise gleitmodifizierten Kunststoff-Spritzgußteil. Eine derartige Lageraufnahme kann auch ohne Nachbearbeitung der tiefgezogenen bzw. gestanzten oder spritzgegossenen vorgenannten Bauteile lange Betriebsstandzeiten der darauf drehbaren bzw. verschwenkbaren gelagerten Bauteile gewährleisten.

An die Mitnehmerscheibe 4 ist konzentrisch zur Umfangsfläche des Lagerhalses 2.1 des Getriebegehäusedeckels 2 ein sich in Richtung auf den Boden des Getriebegehäuses 1 erstreckender axialer hülsenförmiger Lagervorsprung 4.1 einstückig angeformt, der einerseits mit seiner Innenumfangsfläche drehbar auf dem Lagerhals 2.1 des Getriebegehäuses 2 gelagert ist und auf dessen Außenumfang andererseits das Getrieberad 3 tangential verschwenkbar gelagert ist. Der axiale Lagervorsprung 4.1 ragt durch eine Öffnung 1.4 des Getriebegehäuses 1 nach außen und dient mit einer nach außen ragenden Lagervorsprungsverlängerung 4.2 als Kupplungsteil in Form eines Außenritzel 4.4 zur Aufnahme eines Innenritzels 9.2 einer Seilscheibe 9.1, die in einem an das Getriebegehäuse 1 angeflanschten Seilscheibengehäuse 9 eines Seil-Fensterhebers angekuppelt ist. Die Lagervorsprungsverlängerung 4.2 kann in vorteilhafter Weise auch zu einer zusätzlichen Lagerabstützung 4.5 an einem entsprechenden Lageranstz des Seilscheibengehäuses 9 dienen.

Die Abdichtung des gesamten Getriebegehäuses 1 gegen ein Eindringen von Feuchtigkeit von außen erfolgt erfindungsgemäß durch eine einzige dynamische Dichtung 7, insbesondere in Form eines axial und radial dichtend andrückenden Quadringes 7 in einer Ausnehmung 1.5 des Getriebegehäuses 1 derart, daß der Quadring dichtend sowohl an der Umfangsfläche des axialen Lagervorsprungs 4.1 als auch axial und radial dichtend an dem Getriebegehäuse 1 anliegt, sowie durch eine einzige statische Dichtung 8, die außenrandseitig zwischen dem von einem Paßrand 1.1 des Getriebegehäuses 1 übergriffenen Getriebegehäusedeckels 2 und einer Dichtfläche 1.2 des Getriebegehäuses 1 angeordnet ist. Zweckmäßigerweise wird die dynamische Dichtung 7 im Preßsitz zwischen der Ausnehmung 1.4 des Getriebegehäuses 1 und der Lauffläche des Lagervorsprungs 4.1 gehalten oder, ähnlich wie die statische Dichtung 8, zuvor an das Getriebegehäuse 1 angespritzt.

Beim Zusammenbau des Getriebes werden in einer sogenannten Aufbaumontage die einzelnen Bauteile in das Getriebegehäuse 1 eingelegt und dieses durch den außenrandseitig mittels des Paßrandes 1.1 eingepaßten, am Getriebegehäuses 1 anliegenden Getriebegehäusedeckels 2 verschlossen. Die Mitnehmerscheibe 4 bzw. das Getrieberad 3 liegen im Sinne einer axialen Abstützung unmittelbar bzw. mittelbar einerseits gegeneinander und andererseits an dem jeweils benachbarten Getriebegehäuse 1 bzw. Getriebegehäusedeckel 2 an, wobei in vorteilhafter Weise zur punktuellen axialen Abstützung an die Mitnehmerscheibe 4 bzw. das Getrieberad 3 axial vorstehende Anlaufrippen 3.1,3.2;4.6,4.7 mit wiederum vorzugsweise zwischen zwei Anlaufrippen vorgesehenen Schmiermittel-Depoträumen 3.3;4.8 angeformt sind; die Anlaufrippen können im Rahmen vorliegender Erfindung auch alternativ am Getriebegehäuse 1 bzw. am Getriebegehäusedeckel 2 vorgesehen sein.

Die vorliegende Erfindung ist anhand eines Fensterheberantriebes für ein Kraffahrzeug erläutert; in gleicher Weise kann der Verstellantrieb erfindungsgemäß auch Anwendung finden bei Schiebedachantrieben, Sitzverstellantrieben und dergleichen.

## Patentansprüche

1. Verstellantrieb, insbesondere Kraftfahrzeug-Fensterheberantrieb, enthaltend ein Getriebegehäuse (1), einen das Getriebegehäuse (1) abschließenden Getriebegehäusedeckel (2) sowie einen axialen Lagerhals (2.1) zur drehbaren bzw. schwenkbaren konzentrischen Lagerung eines antriebsseitigen Getrieberades (3) und einer abtriebsseitigen Mitnehmerscheibe (4) mit den Merkmalen:
a) An dem Getriebegehäusedeckel (2) ist ein in das Getriebegehäuse (1) axial ragender, vorzugsweise hülsenförmiger, Lagerhals (2.1) befestigt;
b) an der Mitnehmerscheibe (4) ist konzentrisch und radial außen zu dem Lagerhals (2.1) ein axialer hülsenförmiger Lagervorsprung (4.1) befestigt;
c) die Mitnehmerscheibe (4) ist über ihren Lagervorsprung radial außen (4.1) auf dem Lagerhals (2.1) des Getriebegehäusedeckels (2) drehbar gelagert;
d) der axiale Lagervorsprung (4.1) der Mitnehmerscheibe (4) ist mit seinem freien Ende durch eine Öffnung (1.4) des Getriebegehäuses (1) herausgeführt und mit einem Kupplungsteil (4.4) für weitere äußere Antriebsmittel (9.1) versehen;
e) das Getrieberad (3) ist radial außen auf dem Lagervorsprung (4.1) der Mitnehmerscheibe (4) tangential verschwenkbar gelagert.

2. Verstellantrieb nach Anspruch 1 mit dem Merkmal:
f) Der hülsenförmige Lagervorsprung (4.1) ist an seinem axialen freien Ende topfförmig ausgebildet.

3. Verstellantrieb nach Anspruch 1 und/oder 2 mit dem Merkmal:
g) Der axiale Lagervorsprung (4.1) der Mitnehmerscheibe (4) ist durch eine dynamische Dichtung (7) axial und radial gegenüber dem Getriebegehäuse (1), insbesondere im Bereich der Öffnung (1.4) zur Herausführung des freien Endes des Lagervorsprungs (4.1), abgedichtet.

4. Verstellantrieb nach Anspruch 3 mit dem Merkmal:
h) Als dynamischen Dichtung ist ein, insbesondere in einer Ausnehmung (1.5) des Getriebegehäuses (1) angeordneter, Quadring (7) vorgesehen.

5. Verstellantrieb nach Anspruch 4 mit dem Merkmal:
i) Die dynamische Dichtung (7) ist im Preßsitz zwischen der Ausnehmung (1.5) des Getriebegehäuses (1) und der Lauffläche des Lagervorsprungs (4.1) gehalten.

6. Verstellantrieb nach Anspruch 3 und/oder 4 mit dem Merkmal:
j) Die Dichtung (7) ist an das Getriebegehäuse (1) angespritzt.

7. Verstellantrieb nach zumindest einem der Ansprüche 1-6 mit dem Merkmal:
k) An dem Getriebegehäusedeckel (2) ist außenrandbereichsseitig eine gegen eine Dichtfläche (1.2) des Getriebegehäuses (1) zur Anlage kommende statische Dichtung (8) gehaltert, insbesondere angespritzt.

8. Verstellantrieb nach zumindest einem der Ansprüche 1-7 mit dem Merkmal:
l) Der Lagerhals (2.1) ist einstückiger Bestandteil des Getriebegehäusedeckels (2).

9. Verstellantrieb nach zumindest einem der Ansprüche 1-8 mit dem Merkmal:
m) Der vorzugsweise mit dem Lagerhals (2.1) einstückige Getriebegehäusedeckel (2) besteht aus einem metallenen Stanzbiege- bzw. Stanzzieh-Blechteil.

10. Verstellantrieb nach zumindest einem der Ansprüche 1-8 mit dem Merkmal:
n) Der vorzugsweise mit dem Lagerhals (2.1) einstückige Getriebegehäusedeckel (2) besteht aus einem von einer festigkeitserhöhenden Beimischung freien, vorzugsweise gleitmodifizierten, Kunststoff-Spritzgußteil.

11. Verstellantrieb nach zumindest einem der Ansprüche 1-10 mit dem Merkmal:
o) Die Mitnehmerscheibe (4) bzw. das Getrieberad (3) liegen im Sinne einer axialen Abstützung unmittelbar bzw. mittelbar einerseits gegeneinander und andererseits an dem benachbarten Getriebegehäuse (1) bzw. dem benachbarten Getriebegehäusedeckel (2) an.

12. Verstellantrieb nach Anspruch 11 mit dem Merkmal:
p) Zur axialen Abstützung sind an die Mitnehmerscheibe (4) bzw. das Getrieberad (3) axial vorstehende Anlaufrippen (3.1,3.2;4.6,4.7) mit vorzugsweise zwischen diesen eingeschlossenem Schmiermittel-Depot (3.3;4.8) angeformt.

## Claims

1. Adjustment drive, in particular motor-vehicle window-lifter drive, containing a gear housing (1), a gear-housing cover (2) terminating the gear housing (1), and an axial bearing neck (2.1) for the rotatable or pivotable concentric mounting of a drive-side gear wheel (3) and of an output-side driving disc (4), having the features:
a) a preferably sleeve-like bearing neck (2.1) projecting axially into the gear housing (1) is fastened on the gear-housing cover (2);
b) an axial sleeve-like bearing protrusion (4.1) is fastened on the driving disc (4), concentrically and radially externally with respect to the bearing neck (2.1);
c) the driving disc (4) is mounted rotatably, radially externally via its bearing protrusion (4.1), on the bearing neck (2.1) of the gear-housing cover (2);
d) the axial bearing protrusion (4.1) of the driving disc (4) passes out, by means of its free end, through an opening (1.4) of the gear housing (1) and is provided with a coupling part (4.4) for further outer drive means (9.1);
e) the gear wheel (3) is mounted in a tangentially pivotable manner radially externally on the bearing protrusion (4.1) of the driving disc (4).

2. Adjustment drive according to Claim 1, having the feature:
f) the sleeve-like bearing protrusion (4.1) is of a cup-shaped design at its axial free end.

3. Adjustment drive according to Claim 1 and/or 2, having the feature:
g) the axial bearing protrusion (4.1) of the driving disc (4) is sealed by a dynamic seal (7) axially and radially with respect to the gear housing (1), in particular in the region of the opening (1.4) for the passage of the free end of the bearing protrusion (4.1).

4. Adjustment drive according to Claim 3, having the feature:
h) a square ring (7) arranged, in particular, in a recess (1.5) of the gear housing (1) is provided as the dynamic seal.

5. Adjustment drive according to Claim 4, having the feature:
i) the dynamic seal (7) is retained with a press fit between the recess (1.5) of the gear housing (1) and the running surface of the bearing protrusion (4.1).

6. Adjustment drive according to Claim 3 and/or 4, having the feature:
j) the seal (7) is injection moulded onto the gear housing (1).

7. Adjustment drive according to at least one of Claims 1-6, having the feature:
k) a static seal (8), which comes to rest against a sealing surface (1.2) of the gear housing (1), is secured, in particular injection moulded, on the outer-border region of the gear-housing cover (2).

8. Adjustment drive according to at least one of Claims 1-7, having the feature:
l) the bearing neck (2.1) is an integral part of the gear-housing cover (2).

9. Adjustment drive according to at least one of Claims 1-8, having the feature:
m) the gear-housing cover (2), which is preferably integral with the bearing neck (2.1), comprises a punched/bent or punched/drawn sheet-metal part.

10. Adjustment drive according to at least one of Claims 1-8, having the feature:
n) the gear-housing cover (2), which is preferably integral with the bearing neck (2.1), comprises a plastic injection moulding which is free of a strength-increasing admixture and is preferably modified for surface slip.

11. Adjustment drive according to at least one of Claims 1-10, having the feature:
o) the driving disc (4) and the gear wheel (3) rest, with the effect of axial support, directly and/or indirectly, on the one hand, against one another and, on the other hand, against the adjacent gear housing (1) and the adjacent gear-housing cover (2).

12. Adjustment drive according to Claim 11, having the feature:
p) for axial support, axially projecting run-on ribs (3.1, 3.2; 4.6, 4.7) with lubricant pockets (3.3; 4.8) preferably enclosed between said ribs are integrally formed on the driving disc (4) and the gear wheel (3).

## Revendications

1. Dispositif d'entraînement, notamment dispositif d'entraînement de lève-glace de véhicule automobile, comprenant un carter de protection des engrenages (1), un couvercle (2) qui ferme ce carter de protection des engrenages (1), ainsi qu'un col axial de palier (2.1) servant à supporter concentriquement, de manière qu'ils puissent tourner ou basculer, une roue d'engrenage (3) sur le côté d'entraînement et un disque d'entraînement (4) situé sur le côté mené, présentant les caractéristiques suivantes
a) un col de palier (2.1), de préférence en forme de douille, qui pénètre axialement dans le carter de protection des engrenages (1), est fixé au couvercle (2) de ce carter de protection des engrenages;
b) une saillie axiale de palier en forme de douille (4.1) est fixée, concentriquement et radialement, en étant à l'extérieur du col (2.1) de palier, au disque d'entraînement (4) ;
c) le disque d'entraînement (4) est monté, radialement à l'extérieur (4.1) sur le col de palier (2.1) du couvercle (2) du carter de protection des engrenages, de manière à pouvoir tourner par l'intermédiaire de sa saillie de palier;
d) la saillant axiale de palier (4.1) du disque d'entraînement (4) sort, par son extrémité libre, dans une ouverture (1.4) du carter de protection des engrenages (1) et est munie d'une partie d'accouplement (4.4) à d'autres moyens extérieurs d'entraînement (9.1);
e) la roue d'engrenage (3) est montée radialement à l'extérieur de la saillie de palier (4.1) du disque d'entraînement (4), de manière à pouvoir basculer tangentiellement.

2. Dispositif d'entraînement selon la revendication 1, présentant la caractéristique suivante :
f) la saillie de palier en forme de douille (4.1) est en forme de pot à son extrémité axiale libre.

3. Dispositif d'entraînement selon la revendication 1 et/ou 2 présentant la caractéristique suivante :
g) la saillie axiale de palier (4.1) du disque d'entraînement (4) est rendue étanche, axialement et radialement par rapport au carter de protection des engrenages, au moyen d'une garniture d'étanchéité dynamique (7), notamment dans la zone de l'ouverture (1.4) de sortie de l'extrémité libre de la saillie de palier (4.1).

4. Dispositif d'entraînement selon la revendication 3, présentant la caractéristique suivante :
h) il est utilisé, comme garniture d'étanchéité dynamique, une bague (7) de section carrée, disposée notamment dans un évidement (1.5) du carter de protection des engrenages (1).

5. Dispositif d'entraînement selon la revendication 4, présentant la caractéristique suivante :
i) la garniture d'étanchéité dynamique (7) est maintenue selon un ajustement serré entre l'évidement (1.5) du carter de protection des engrenages (1) et la surface de déplacement de la saillie de palier (4.1).

6. Dispositif d'entraînement selon la revendication 3 et/ou 4, présentant la caractéristique suivante :
j) la garniture d'étanchéité (7) est formée par moulage par injection sur le carter de protection des engrenages (1).

7. Dispositif d'entraînement suivant au moins l'une des revendications 1 à 6, présentant la caractéristique suivante :
k) une garniture d'étanchéité statique (8), qui vient s'appliquer à une surface d'étanchéité (1.2) du carter de protection des engrenages (1), est maintenue, notamment par moulage par injection, sur le bord extérieur du couvercle (2) du carter de protection des engrenages.

8. Dispositif d'entraînement selon au moins l'une des revendications 1 à 7, présentant la caractéristique suivante :
1) le col de palier (2.1) est d'un seul tenant avec le couvercle (2) du carter de protection des engrenages.

9. Dispositif d'entraînement suivant au moins l'une des revendications 1 à 8, présentant la caractéristique suivante :
m) le couvercle (2) du carter de protection des engrenages, qui est de préférence d'un seul tenant avec le tourillon (2.1), est constitué d'une pièce en tôle métallique formée par découpage et pliage ou découpage et emboutissage.

10. Dispositif d'entraînement suivant au moins l'une des revendications 1 à 8, présentant la caractéristique suivante :
n) le couvercle (2) du carter de protection des engrenages, qui est de préférence d'un seul tenant avec le col de palier (2.1), est constitué d'une pièce moulée par injection en une matière plastique exempte de tout mélange augmentant la résistance et de préférence modifiée par un agent favorisant le glissement.

11. Dispositif d'entraînement suivant au moins l'une des revendications 1 à 10, présentant la caractéristique suivante :
o) le disque d'entraînement (4) ou la roue de transmission (3) s'appliquent, dans le sens d'un appui axial, directement ou indirectement d'une part l'un à l'autre et d'autre part au carter de protection des engrenages (1) voisin ou au couvercle voisin (2) du carter de protection des engrenages.

12. Dispositif d'entraînement suivant la revendication 11, présentant la caractéristique suivante :
p) pour l'appui axial, des nervures axialement saillantes d'application (3.1, 3.2, 4.6, 4.7), entre lesquelles est inséré de préférence un volume de lubrifiant (3.3, 4.8), sont issues du disque d'entraînement (4) ou de la roue d'engrenage (3).
